# FASCICULE DE BREVET EUROPEEN

(11) **EP 3 046 781 B1**
(45) Date de publication et mention de la délivrance du brevet: **30.01.2019**
(21) Numéro de dépôt: 14766698.6
(22) Date de dépôt: 15.09.2014
(51) Int. Cl.: B60C 9/09

(54) **PNEUMATIQUE COMPRENANT UNE ARMATURE DE RENFORT DE FLANC**
REIFEN MIT EINEM VERSTÄRKUNGSELEMENT ZUR VERSTÄRKUNG EINER SEITENWAND
TIRE INCLUDING A REINFORCEMENT FOR REINFORCING A SIDEWALL

(30) Priorité: 18.09.2013 FR 1358960
(43) Date de publication de la demande: 27.07.2016
(73) Titulaire: Compagnie Générale des Etablissements Michelin, 63000 Clermont-Ferrand (FR)
(72) Inventeur: ANDRE, Guillaume, F-63040 Clermont-Ferrand Cedex 9 (FR)
(74) Mandataire: Desbordes, Guillaume
(86) Numéro de dépôt international: PCT/EP2014/069606
(87) Numéro de publication internationale: WO 2015/039987

(56) Documents cités:
- EP-A1- 1 857 299
- EP-A1- 2 407 321
- FR-A1- 2 974 583

## Description

L'invention a pour objet un pneumatique comprenant une nappe de carcasse et une nappe de renfort de flanc comprenant des éléments de renforts filaires textiles.

On connait de l'état de la technique un pneumatique classique comprenant une armature de carcasse comprenant une nappe de carcasse ancrée dans le bourrelet par un retournement autour d'une structure annulaire de renfort de façon à former un brin aller qui s'étend d'un bourrelet à l'autre, en traversant le sommet du pneumatique et un brin retour qui s'étend de la structure annulaire de renfort radialement vers l'extérieur.

Lorsque ce pneumatique classique roule sur le sol dans les conditions habituelles d'utilisation (en vitesse et en charge), il peut subir des chocs au niveau de la bande de roulement ou des flancs, dont la fréquence et l'intensité sont souvent considérables. C'est une des fonctions principales d'un pneumatique que d'encaisser ces chocs et de les amortir sans que la roue du véhicule concernée en soit sensiblement affectée, ni dans son mouvement ni dans son intégrité.

Il arrive toutefois que cette faculté d'encaissement rencontre ses limites lorsque les conditions d'impact sont telles que la paroi de l'enveloppe impactée arrive en butée à l'intérieur de la chambre pneumatique, soit directement contre la jante sur laquelle est monté le pneu, soit plus habituellement contre une autre zone de la paroi de l'enveloppe elle-même en appui direct sur la jante de roue. C'est notamment le cas quand la jante présente une saillie radiale externe par rapport au siège de la jante proprement dit. Une telle saillie, habituellement appelée « crochet de jante », est en général prévue pour empêcher le bourrelet pneumatique de déjanter sous l'effet de contraintes de direction axiale au cours des manoeuvres de la roue.

Le pneumatique classique soumis à ce type d'incident est susceptible de souffrir des conséquences du phénomène qui vient d'être évoqué. Dans la section impactée par le choc, la paroi interne du pneumatique se trouve soudainement repliée et pincée entre l'obstacle et le crochet de jante (« pinch shock »). Ceci peut entrainer la rupture de la paroi et le pneumatique perd sa pression de gonflage, ce qui, la plupart du temps, implique l'immobilisation immédiate du véhicule. Mais même lorsque le pneumatique résiste, ses composants peuvent avoir été détériorés par l'incident ; des renflements dans les flancs ou d'autres signes indiquent à l'expert que la structure de l'enveloppe a été affaiblie et que sa paroi risque de se rompre sous l'effet des flexions répétées de ses composants, à plus ou moins long terme.

Plusieurs pistes ont été proposées pour renforcer les pneumatiques par rapport à ce phénomène de « pinch shock ». Pour renforcer le pneumatique classique décrit ci-dessus par rapport au « pinch shock », il est notamment connu de rallonger le brin retour. L'extrémité radialement extérieure du brin retour de la nappe de carcasse, remonte radialement de façon à se trouver prise en sandwich entre le brin aller de la nappe carcasse et une armature du sommet du pneumatique. Cette architecture est connue sous le nom de « shoulder lock ».

Si une architecture du type « shoulder lock » permet effectivement de rendre le pneumatique moins vulnérable par rapport au « pinch shock », elle comporte l'inconvénient qu'elle est onéreuse tout en ne permettant pas un ajustement très fin de la performance du pneumatique. En effet, le brin aller et le brin retour allongé de la nappe de carcasse comportent chacun des éléments de renfort filaires textiles identiques à ceux de la nappe de carcasse d'un pneumatique classique dépourvu de brin retour allongé, ceci afin de minimiser la diversité des nappes dans les procédés de fabrication industriels.

Un pneumatique ayant les caractéristiques techniques du préambule de la revendication 1 est divulgué dans le document EP-A-1857299.

L'invention a pour but un pneumatique résistant au « pinch shock » et présentant une endurance optimisée.

A cet effet, l'invention a pour objet un pneumatique comprenant :
- un sommet surmonté d'une bande de roulement, deux flancs, deux bourrelets, chaque flanc reliant chaque bourrelet au sommet,
- une armature de carcasse ancrée dans chacun des bourrelets et s'étendant depuis chaque bourrelet à travers chaque flanc et comprenant des éléments de renfort filaires textiles de carcasse, chaque élément de renfort filaire textile de carcasse comprenant au moins deux brins multifilamentaires de carcasse enroulés en hélice l'un autour de l'autre selon une torsion R1 exprimée en tours par mètre,
- une armature de renfort de flanc comprenant des éléments de renfort filaires textiles de renfort de flanc, chaque élément de renfort filaire textile de renfort de flanc comprenant au moins deux brins multifilamentaires de renfort de flanc enroulés en hélice l'un autour de l'autre selon une torsion R2 exprimée en tours par mètre, pneumatique dans lequel R=max(K1,i)/min(K2,j)>1 avecK1,i étant le facteur de torsion de chacun des i brins multifilamentaires de carcasse de chaque élément de renfort filaire textile de carcasse défini par K1,i=R1.[T1,i/(1000.d1,i)]^{1/2} dans lequel T1,i, exprimé en tex, est le titre de chacun des i brins multifilamentaires de carcasse et d1,i est la densité du matériau dans lequel est réalisé chacun des i brins multifilamentaires de carcasse, le facteur de torsion K1,i de chaque brin multifilamentaire de carcasse étant compris dans un domaine de valeurs allant de 125 à 155, le titre T1,i de chacun des i brins multifilamentaires de carcasse étant compris dans un domaine de valeurs allant de 110 à 170, la torsion R1 étant compris dans un domaine de valeurs allant 390 à 450
- K2,j étant le facteur de torsion de chacun des j brins multifilamentaires de renfort de flanc de chaque élément de renfort filaire textile de renfort de flanc défini par K2,j=R2.[T2,j/(1000.d2,j)]^{1/2} dans lequel T2,j, exprimé en tex, est le titre de chacun des j brins multifilamentaires de renfort de flanc et d2,j est la densité du matériau dans lequel est réalisé chacun des j brins multifilamentaires de renfort de flanc, le facteur de torsion K2,j de chaque brin multifilamentaire de renfort de flanc étant compris dans un domaine de valeurs allant de 125 à 150, le titre T2,j de chacun des j brins multifilamentaires de renfort de flanc étant compris dans un domaine de valeurs allant de 300 à 360, la torsion R2 étant compris dans un domaine de valeurs allant 240 à 300.

Le pneumatique selon l'invention présente à la fois une résistance importante au « pinch shock » et une endurance optimisée comme le montre les résultats ds test comparatifs ci-après.

En effet, cet objectif est atteint par un pneumatique associant une nappe de carcasse optimisée, c'est-à-dire dans laquelle le facteur de torsion des éléments de renfort filaires textiles de carcasse est tel qu'elle ne peut pas, à elle seule, dans les conditions d'usage sévères, remplir certaines fonctions, par exemple encaisser des chocs, et une nappe de renfort de flanc dans laquelle le facteur de torsion des éléments de renfort est inférieur au facteur de torsion des éléments de renfort de la nappe de carcasse.

De plus, les fonctions de l'armature de carcasse d'un pneumatique classique sont donc assurées par l'association de l'armature de carcasse et de l'armature de renfort de flanc, ce qui permet d'optimiser séparément chacune de ces nappes et d'obtenir un rapport performance/prix de revient amélioré.

En outre, l'association d'une armature de carcasse et d'une armature de renfort de flanc telle que définie dans l'invention permet de réduire le coût et la masse du pneumatique et d'en augmenter la robustesse, tout en donnant au concepteur une flexibilité accrue.

Le pneumatique selon l'invention permet de renforcer l'armature de carcasse là où elle est fortement sollicitée (c'est-à-dire dans les flancs) tout en réduisant sa résistance (et, par conséquent, son coût) dans la zone où elle n'est que peu sollicitée (c'est-à-dire dans le sommet), contrairement au pneumatique présentant une architecture « shoulder lock » qui se contente de redoubler le brin aller par un brin retour allongé dans le flanc avec des éléments de renforts filaires identiques. Le pneumatique selon l'invention est donc d'autant plus avantageux que le flanc est court et le sommet large.

Par élément filaire, on entend tout élément longiligne de grande longueur relativement à sa section transversale, quelle que soit la forme de cette dernière, par exemple circulaire, oblongue, rectangulaire ou carrée, ou même plate, cet élément filaire pouvant être rectiligne comme non rectiligne. Lorsqu'il est de forme circulaire, son diamètre est de préférence inférieur à 5 mm, plus préférentiellement compris dans un domaine de 0,1 à 2 mm.

L'élément de renfort est également appelé retors. Chaque brin multifilamentaire est également appelé surtors et comprend une pluralité de filaments élémentaires ou monofilaments éventuellement entremêlés les uns avec les autres. Chaque brin multifilamentaire comprend entre 50 et 2000 monofilaments.

Par textile, on entend que les éléments de renfort filaires ne sont pas métalliques, c'est-à-dire ne sont pas réalisés dans un matériau métallique.

La valeur max(K1,i) correspond à la valeur maximum des K1,i facteurs de torsion de chacun des i brins multifilamentaires de carcasse. La valeur min(K2,j) correspond à la valeur minimum des K2,j facteurs de torsion de chacun des j brins multifilamentaires de renfort de flancs.

La densité du matériau dans lequel est réalisé chacun des brins multifilamentaires est mesuré par des techniques classiques connues de l'homme du métier, par exemple au moyen d'une colonne de densité.

Le titre (ou densité linéique) des brins élémentaires ou des éléments de renfort est déterminé sur au moins deux échantillons, chacun correspondant à une longueur d'au moins 5 m, par pesée de cette longueur ; le titre est donné en tex (poids en grammes de 1000 m de produit - rappel: 0, 111 tex égal à 1 denier).

La torsion de chaque élément de renfort filaire textile est mesurée de façon connue par l'homme du métier, par exemple en détordant une longueur prédéterminée de l'élément filaire textile jusqu'à ce que les deux brins multifilamentaires soient parallèles. Le nombre de tours nécessaires à l'obtention des deux brins multifilamentaires parallèles divisé par la longueur prédéterminée donne la torsion R1 ou R2 de chaque élément de renfort filaire textile.

Avantageusement, R≥1,05, de préférence R≥1,10, plus préférentiellement R≥1,30 et encore plus préférentiellement R≥1,40. Plus le rapport R est élevé, meilleure est l'endurance du pneumatique.

Avantageusement, R≤2, de préférence, R≤1,75 et plus préférentiellement R≤1,6. Toutefois, au-delà d'un certain rapport R, il existe un risque que la nappe de carcasse ne puisse plus exercer ses fonctions.

Avantageusement, le rapport R'=Fm1/Fm2 dans lequel Fm1 est la force à rupture de l'armature de carcasse et Fm2 est la force à rupture de l'armature de renfort de flanc est inférieur à 1, de préférence inférieur ou égal à 0,8 et plus préférentiellement inférieur ou égal à 0,6.

Avantageusement, le rapport R'=Fm1/Fm2 est supérieur ou égal à 0,4, de préférence à 0,5 et plus préférentiellement à 0,6.

La force à la rupture de chaque élément de renfort filaire textile est déterminée sur les éléments après extraction du pneumatique cuit. Pour ce faire, la ou les matrices d'élastomères dans laquelle ou lesquelles sont noyés les éléments de renfort filaires textiles est ou sont retirées et les éléments sont arrachés du pneumatique, en prenant soin de ne pas les endommager. On évitera l'utilisation de solvants, ce qui veut dire que les éléments restent partiellement enrobés de matrice d'élastomère. Lorsque les éléments sont en rayonne, ils sont séchés pendant 120 ± 15 min. à une température de 105 ± 4.5°C. Ensuite, les éléments sont conditionnés à 23 ± 2°C, à une hygrométrie de 27±10%, pendant une durée qui dépend de la nature des éléments :
- rayonne : au moins 5 jours et au plus 15 jours ;
- nylon et hybrides à base de nylon : au moins 3 jours ;
- autres (notamment PET et aramides) : au moins 1 jour.

On mesure la force à la rupture de chaque élément de renfort filaire textile à l'aide d'une machine de traction « INSTRON » (voir aussi la norme ASTM D 885-06). Les échantillons testés subissent une traction sur une longueur initiale L0 (en mm) à une vitesse nominale de L0 mm/min, sous une pré-tension 5 standard de 1 cN/tex (moyenne sur au moins 10 mesures). La force à la rupture de chaque élément de renfort filaire textile retenue est la force maximale mesurée. On obtient la force à rupture de chaque armature (daN.cm⁻¹) en multipliant cette force à rupture de chaque élément de renfort filaire textile par le nombre d'élément de renfort filaire textile présents par cm d'armature.

Pour chaque élément de renfort filaire textile de carcasse, on a 110 ≤ T1,i ≤ 170 et 390 ≤ R1 ≤ 450 dans les modes de réalisation de l'invention.

Pour chaque élément de renfort filaire textile de renfort de flanc, on a 300 ≤ T2,i ≤ 360 et 240 ≤ R2 ≤ 300 dans les modes de réalisation de l'invention.

De préférence, les brins multifilamentaires de carcasse sont réalisés dans le même matériau. De préférence également, les brins multifilamentaires de renfort de flanc sont réalisés dans le même matériau.

De préférence, les brins multifilamentaires de carcasse présentent la même torsion. De préférence également, les brins multifilamentaires de renfort de flanc présentent la même torsion.

De préférence, les brins multifilamentaires de carcasse présentent le même titre. De préférence également, les brins multifilamentaires de renfort de flanc présentent le même titre.

Dans les modes de réalisation de l'invention, K1,i est compris dans un domaine de valeurs allant de 125 à 155. Dans d'autres modes de réalisation décrit, K1,i est compris dans un domaine de valeurs allant de 100 à 120.

Dans certains modes de réalisation décrits, K2,j est compris dans un domaine de valeurs allant de 90 à 105. Dans les modes de réalisation de l'invention, K2,j est compris dans un domaine de valeurs allant de 125 à 150.

Dans un mode de réalisation préféré, l'armature de carcasse est axialement discontinue, la discontinuité s'étendant axialement au moins en partie sous le sommet. L'armature de carcasse participant peu ou pas au fonctionnement du sommet du pneumatique, il est possible de la supprimer dans cette partie du pneumatique. Ce mode de réalisation est d'autant plus avantageux que les éléments de renfort textiles de l'armature de carcasse discontinue présentent une force à rupture suffisamment élevée par ailleurs pour assurer les fonctions d'une armature de carcasse classique. Dans ce mode de réalisation, le pneumatique comprenant une armature de sommet radialement intercalée entre l'armature de carcasse et la bande de roulement, l'armature de carcasse axialement discontinue comprend deux extrémités axialement internes agencées chacune axialement à l'intérieur de l'extrémité axialement extérieure de la nappe de sommet radialement adjacente. Plus préférentiellement, la distance entre l'extrémité axialement extérieure de la nappe de sommet radialement adjacente et l'extrémité axialement interne de l'armature de carcasse est supérieure ou égale à 10 mm.

De préférence, l'armature de carcasse comprend une unique nappe de carcasse.

De préférence, l'armature de renfort de flanc comprend une unique nappe de renfort de flanc.

Avantageusement, l'armature de carcasse est ancrée dans chaque bourrelet par un retournement autour d'une structure annulaire du bourrelet de manière à former un brin aller et un brin retour.

Dans un mode de réalisation, l'armature de renfort de flanc s'étend, dans le bourrelet, axialement entre le brin aller et le brin retour de l'armature de carcasse. Ainsi, l'armature de renfort de flanc est maintenue entre les brins aller et retour de l'armature de carcasse et, par conséquent assure une bonne reprise des tensions.

Dans un autre mode de réalisation, l'armature de renfort de flanc s'étend, dans le bourrelet, axialement à l'extérieur du brin retour.

De préférence, l'extrémité radialement intérieure de l'armature de renfort de flanc est radialement à l'intérieur du point radialement le plus à l'extérieur du brin retour de l'armature de carcasse.

Dans un mode de réalisation préféré, la distance radiale entre l'extrémité radialement intérieure de l'armature de renfort de flanc et le point radialement le plus à l'extérieur du brin retour de l'armature de carcasse est supérieure ou égale à 10 mm.

Avantageusement, le pneumatique comprend une armature de sommet radialement intercalée entre l'armature de carcasse et la bande de roulement.

De préférence, l'armature de sommet comprenant au moins une nappe de sommet, l'extrémité radialement extérieure de l'armature de renfort de flanc est axialement à l'intérieur de l'extrémité axialement extérieure de la nappe de sommet radialement adjacente à l'armature de renfort de flanc. Ainsi, l'armature de renfort de flanc est maintenue sous la nappe de sommet qui lui est radialement adjacente ce qui lui permet de bien reprendre les tensions et de soulager l'armature de carcasse.

Dans un mode de réalisation préféré, la distance axiale entre l'extrémité radialement extérieure de l'armature de renfort de flanc et l'extrémité axialement extérieure de la nappe de sommet radialement adjacente à l'armature de renfort de flanc est supérieure ou égale à 10 mm.

Dans des modes de réalisation, l'armature de sommet comprend, en se déplaçant radialement vers l'extérieur du pneumatique, une armature de travail et une armature de frettage. De façon alternative, l'armature de sommet comprend, en se déplaçant radialement vers l'extérieur du pneumatique, une armature de travail et une armature de protection. On peut également avoir une armature de sommet comprenant, en se déplaçant radialement vers l'extérieur du pneumatique, une armature de travail, une armature de frettage et une armature de protection.

Selon un mode de réalisation particulier, les éléments de renfort filaires textiles de renfort de flanc sont orientés sensiblement radialement. Cette conception permet de conserver le compromis global de performance lié à la structure radiale de l'armature de carcasse (compromis confort, résistance au roulement, comportement...) tout en améliorant la performance en « pinch shock ».

Selon un autre mode de réalisation particulier, les éléments de renfort filaires textiles de renfort de flanc sont inclinés à un angle compris entre 40° et 80°, et de préférence entre 40° et 50°, par rapport à la direction radiale. Cette conception permet d'augmenter la rigidité verticale, ce qui est bénéfique pour la performance en « pinch shock », tout en orientant aussi les éléments de renfort de manière à favoriser la reprise de tensions longitudinales, ce qui permet d'améliorer leur résistance aux chocs de trottoir.

De façon optionnelle, les éléments de renfort filaires textiles de carcasse et/ou de renfort de flanc sont réalisés dans un matériau choisi parmi un polyester, tel que le polyéthylène téréphtalate (PET), le polyéthylène naphthalate (PEN), le polybutylène téréphthalate (PBT), le polybutylène naphthalate (PBN), le polypropylène téréphthalate (PPT) ou le polypropylène naphthalate (PPN), un polyamide, par exemple un polyamide aliphatique comme le nylon ou un polyamide aromatique comme l'aramide, une polycétone, une cellulose comme la rayonne ou un mélange de ces matériaux. De préférence, les éléments de renfort filaires textiles de carcasse et/ou de renfort de flanc sont réalisés dans un matériau choisi parmi un polyester, un polyamide, une cellulose ou un mélange de ces matériaux.

On pourra ainsi envisager des éléments de renfort filaires textiles hybrides de carcasse et/ou de renfort de flanc en aramide/nylon ou encore en aramide/PET.

De façon optionnelle, le pneumatique comprend une paroi interne étanche du pneumatique, la paroi interne étanche étant au moins en partie recouverte d'une couche d'un produit auto-obturant.

La présence du produit auto-obturant permet au pneumatique de mieux résister aux effets néfastes d'une perforation. Autrement dit, la très grande majorité des crevaisons n'aura aucune conséquence sur la pression interne de gonflage. Dans le cas où cette couche ne permet pas d'éviter la perte de pression du pneumatique, on a constaté que la présence de cette couche permet d'augmenter de façon significative la distance que le pneumatique peut parcourir en roulage à plat tout en conservant la possibilité de conduire le véhicule puisque les bourrelets restent en place sur les sièges de la jante. La présence du produit auto-obturant permet en effet de retarder l'endommagement des flancs du pneumatique par effet de lubrification notamment. Ce pneumatique permet ainsi au véhicule, quelle que soit la gravité d'une perforation ou crevaison, de continuer à rouler sur au moins quelques kilomètres ce qui permet de quitter une zone dangereuse.

La couche de produit auto-obturant peut comporter au moins un élastomère thermoplastique styrénique (dit « TPS ») et plus de 200 pce d'une huile d'extension dudit élastomère, « pce » signifiant parties en poids pour cent parties d'élastomère solide.

Le TPS peut être l'élastomère majoritaire de la couche de produit auto-obturant.

L'élastomère TPS peut être choisi dans le groupe constitué par les copolymères blocs styrène/ butadiène/ styrène (SBS), styrène/ isoprène/ styrène (SIS), styrène/ isoprène/ butadiène/ styrène (SIBS), styrène/ éthylène/ butylène/ styrène (SEBS), styrène/ éthylène/ propylène/ styrène (SEPS), styrène/ éthylène/ éthylène/propylène/ styrène (SEEPS) et les mélanges de ces copolymères.

Avantageusement, l'élastomère TPS est choisi dans le groupe constitué par les copolymères SEBS, les copolymères SEPS et les mélanges de ces copolymères.

Selon un autre mode de réalisation, la couche de produit auto-obturant peut comporter au moins (pce signifiant parties en poids pour cent parties d'élastomère solide) :
(a) à titre d'élastomère majoritaire, un élastomère diénique insaturé ;
(b) entre 30 et 90 pce d'une résine hydrocarbonée ;
(c) un plastifiant liquide dont la Tg (température de transition vitreuse) est inférieure à -20°C, à un taux pondéral compris entre 0 et 60 pce ; et
(d) de 0 à moins de 120 pce d'une charge.

L'élastomère diénique insaturé est avantageusement choisi dans le groupe constitué par les polybutadiènes, le caoutchouc naturel, les polyisoprènes de synthèse, les copolymères de butadiènes, les copolymères d'isoprène et les mélanges de tels élastomères.

L'élastomère diénique insaturé peut avantageusement être un élastomère isoprénique, de préférence choisi dans le groupe constitué par le caoutchouc naturel, les polyisoprènes de synthèse et les mélanges de tels élastomères.

Avantageusement, le taux d'élastomère diénique insaturé est supérieur à 50 pce, de préférence supérieur à 70 pce.

Le pneumatique est préférentiellement destiné à des véhicules de tourisme, deux roues, des camionnettes ou des véhicules industriels choisis parmi des camionnettes, véhicules lourds tels que "Poids lourd" - i.e., métro, bus, engins de transport routier (camions, tracteurs, remorques), véhicules hors-la-route -, engins agricoles ou de génie civil, aéronef, autres véhicules de transport ou de manutention.

De préférence, dans un plan de coupe radiale du pneumatique, c'est-à-dire un plan de coupe parallèle à la direction radiale, la distance entre la surface axialement interne du pneumatique et la surface axialement interne de la nappe de renfort axialement la plus externe est, à l'équateur du pneumatique, inférieure ou égale à 6 mm, de préférence 5 mm. La nappe de renfort est une nappe comprenant des éléments de renfort textiles et/ou métalliques. La nappe de renfort peut être une nappe de carcasse ou une nappe de renfort de flanc. Ainsi, le pneumatique n'est préférentiellement pas un pneumatique pour roulage à plat. En d'autres termes, les flancs sont dépourvus d'inserts en caoutchouc permettant de supporter une charge à pression réduite, voire sans pression.

La surface axialement interne du pneumatique définie le volume de gonflage délimité par le pneumatique.

Par « équateur » du pneumatique on entend, la hauteur radiale du point de la plus grande extension axiale de l'armature de carcasse. Dans une coupe radiale du pneumatique, l'équateur apparait comme la ligne droite axiale passant par les points où l'armature de carcasse a sa plus grande largeur axiale lorsque le pneumatique est monté sur une jante et gonflé. Lorsque l'armature de carcasse atteint cette plus grande largeur axiale en plusieurs points, on considère la hauteur radiale du point le plus proche de la mi-hauteur H/2 du pneumatique comme étant l'équateur du pneumatique. L'équateur ainsi défini ne doit pas être confondu avec le plan médian du pneumatique.

L'invention sera mieux comprise à la lecture de la description qui va suivre, donnée uniquement à titre d'exemple non limitatif et faite en se référant aux dessins dans lesquels:
- la figure 1 est une vue en coupe d'un pneumatique selon un premier mode de réalisation de l'invention ;
- la figure 2 est une vue schématique d'une partie de la nappe de carcasse du pneumatique de la figure 1 ;
- la figure 3 est une vue schématique d'une partie de la nappe de renfort de flanc du pneumatique de la figure 1 ;

- la figure 4 est représentation de la tension en fonction de la charge appliquée à différentes nappes de pneumatique, notamment de nappes de carcasse et de nappes de renfort de flanc ;
- les figures 5, 6, 7 et 8 sont des vues analogues à celle de la figure 1 de pneumatiques respectivement selon des deuxième, troisième, quatrième et neuvième modes de réalisation ; et
- la figure 9 est une vue analogue à celle de la figure 1 d'un pneumatique selon l'état de la technique présentant une architecture de type « shoulder-lock ».

Dans la description suivante, dans l'emploi du terme « radial », il convient de distinguer plusieurs utilisations différentes du mot par la personne du métier. Premièrement, l'expression se réfère à un rayon du pneumatique. C'est dans ce sens qu'on dit d'un point P1 qu'il est « radialement intérieur » à un point P2 (ou « radialement à l'intérieur » du point P2) s'il est plus près de l'axe de rotation du pneumatique que le point P2. Inversement, un point P3 est dit « radialement extérieur à » un point P4 (ou « radialement à l'extérieur » du point P4) s'il est plus éloigné de l'axe de rotation du pneumatique que le point P4. On dira qu'on avance « radialement vers l'intérieur (ou l'extérieur) » lorsqu'on avance en direction des rayons plus petits (ou plus grands). Lorsqu'il est question de distances radiales, ce sens du terme s'applique également.

En revanche, un élément de renfort ou une armature est dit « radial » lorsque l'élément de renfort ou les éléments de renfort de l'armature font avec la direction circonférentielle un angle supérieur ou égal à 65° et inférieur ou égal à 90°.

Une direction « axiale » est une direction parallèle à l'axe de rotation du pneumatique. Un point P5 est dit « axialement intérieur » à un point P6 (ou «axialement à l'intérieur » du point P6) s'il est plus près du plan médian M du pneumatique que le point P6. Inversement, un point P7 est dit « axialement extérieur à » un point P8 (ou « axialement à l'extérieur » du point P8) s'il est plus éloigné du plan médian M du pneumatique que le point P8.

Le « plan médian » M du pneumatique est le plan qui est normal à l'axe de rotation du pneumatique et qui se situe à équidistance des structures annulaires de renfort de chaque bourrelet.

D'autre part, tout intervalle de valeurs désigné par l'expression « de a à b » signifie le domaine de valeurs allant de la borne « a » jusqu'à la borne « b » c'est-à-dire incluant les bornes strictes « a » et « b ».

### EXEMPLES DE PNEUMATIQUES SELON L'INVENTION

Dans les figures, on a représenté un repère X, Y, Z correspondant aux orientations habituelles respectivement axiale (X), radiale (Y) et circonférentielle (Z) d'un pneumatique.

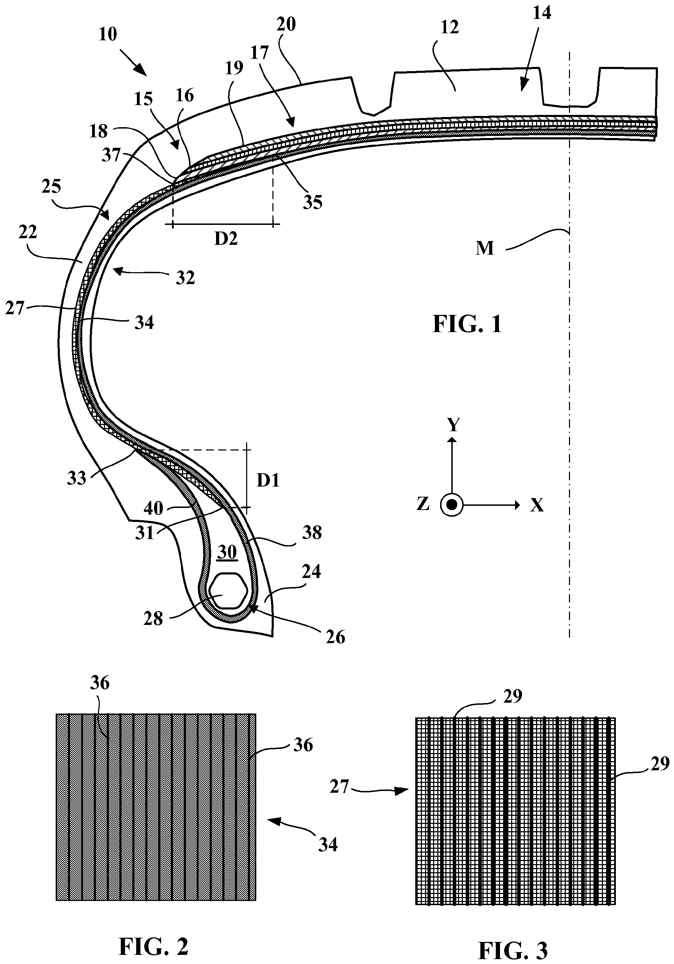

On a représenté sur la figure 1 un pneumatique conforme à un premier mode de réalisation de l'invention et désigné par la référence générale 10. Le pneumatique 10 est sensiblement de révolution autour d'un axe sensiblement parallèle à la direction axiale X. Le pneumatique 10 est ici destiné à un véhicule de tourisme.

Le pneumatique 10 comporte un sommet 12 comprenant une armature de sommet 14 comprenant une armature de travail 15 comprenant deux nappes de travail 16, 18 d'éléments de renfort et une armature 17 de frettage comprenant une nappe de frettage 19. L'armature de sommet 14 est surmontée d'une bande de roulement 20. L'armature de frettage 17, ici la nappe de frettage 19, est radialement intercalée entre l'armature de travail 15 et la bande de roulement 20.

Deux flancs 22 prolongent le sommet 12 radialement vers l'intérieur. Le pneumatique 10 comporte en outre deux bourrelets 24 radialement intérieurs aux flancs 22 et comportant chacun une structure annulaire de renfort 26, en l'occurrence une tringle 28, surmontée d'un masse de gomme 30 de bourrage, ainsi qu'une armature de carcasse radiale 32. L'armature de sommet 14 est radialement intercalée entre l'armature de carcasse 32 et la bande de roulement 20. Chaque flanc 22 relie chaque bourrelet 24 au sommet 14. Le pneumatique 10 comprend également une armature de renfort de flanc radiale 25 comprenant de préférence une unique nappe 27 de renfort de flanc d'éléments de renfort filaires textiles radiaux 29 de renfort de flanc.

L'armature de carcasse 32 comporte de préférence une seule nappe de carcasse 34 d'éléments de renfort filaires textiles radiaux 36 de carcasse. L'armature de carcasse 32 est ancrée à chacun des bourrelets 24 par un retournement autour de la tringle 28 de manière à former dans chaque bourrelet 24 un brin aller 38 s'étendant depuis chaque bourrelet 24 à travers chaque flanc 22 vers le sommet 12, et un brin retour 40. L'armature de carcasse 32 s'étend ainsi depuis les bourrelets 24 à travers les flancs 22 vers le sommet 12. Dans ce premier mode de réalisation, l'armature de carcasse 32 s'étend également au travers du sommet 12.

En référence à la figure 2, chaque élément de renfort filaire textile 36 de carcasse comprend deux brins multifilamentaires de carcasse. Chaque brin multifilamentaire de carcasse est réalisé en polyester, ici en PET, qui sont surtordus individuellement à 420 tours.m⁻¹ dans un sens puis retordus ensemble à R1= 420 tours.m⁻¹ dans le sens opposé. Les deux brins multifilamentaires de carcasse sont enroulés en hélice l'un autour de l'autre. Chaque brin multifilamentaire de carcasse présente un titre T1=144 tex.

En référence à la figure 3, chaque élément de renfort filaire textile 29 de renfort de flanc comprend deux brins multifilamentaires de renfort de flanc. Chaque brin multifilamentaire de renfort de flanc est réalisé en polyester, ici en PET, qui sont surtordus individuellement à 240 tours.m⁻¹ dans un sens puis retordus ensemble à R2=240 tours.m⁻¹ dans le sens opposé. Les deux brins multifilamentaires de renfort de flanc sont enroulés en hélice l'un autour de l'autre. Chaque brin multifilamentaire de carcasse présente un titre T2=220 tex. Le PET utilisé pour chaque élément de renfort filaire textile 36 et 29 est commercialisé par la société Performance Fibers.

Pour la fabrication par retordage des éléments de renfort, on rappellera ici simplement, de manière bien connue de l'homme du métier, que chaque brin multifilamentaire constitutif de l'élément de renfort final est tout d'abord individuellement tordu sur lui-même dans un sens donné (par exemple torsion en Z de Y tours par mètre de brin) au cours d'une première étape pour former un surtors, puis que les brins multifilamentaire ainsi tordus sur eux-mêmes sont ensuite retordus ensemble en sens inverse (par exemple torsion en S de R tours par mètre d'élément de renfort) pour former un retors, ici l'élément de renfort final.

La torsion avant retordage de chaque brin multifilamentaire peut être mesurée sur l'élément de renfort final par détordage des brins multifilamentaires constituants l'élément de renfort (par exemple par détorsion en Z de R tours par mètre d'élément de renfort) jusqu'à ce que l'élément de renfort ne présente plus aucune torsion, puis par détordage de chaque brin multifilamentaire (par exemple par détorsion en S de Y tours par mètres) jusqu'à ce que chaque brin multifilamentaire ne présente plus aucune torsion. Le nombre de tours par mètre R, Y nécessaire à ces deux détordages donne alors respectivement la torsion d'assemblage de l'élément de renfort (ici R=R1=420 pour les éléments 36 et R=R2=240 pour les éléments 29) et la torsion de chaque brin multifilamentaire avant retordage des brins entre eux (ici Y=420 pour les éléments 36 et Y=240 pour les éléments 29). En l'espèce R=Y pour les éléments 36 d'une part et pour les éléments 29 d'autre part.

L'armature de renfort de flanc 25 est agencée axialement à l'extérieur du brin aller 38 et s'étend, dans chaque bourrelet 24, axialement entre le brin aller 38 et le brin retour 40 de l'armature de carcasse 32.

L'extrémité 31 radialement intérieure de l'armature de renfort de flanc 25 est radialement à l'intérieur du point 33 radialement le plus à l'extérieur du brin retour 40 de l'armature de carcasse 32. En l'espèce, la distance radiale D1 entre l'extrémité 31 radialement intérieure de l'armature de renfort de flanc 25 et le point 33 radialement le plus à l'extérieur du brin retour 40 de l'armature de carcasse 32 est supérieure ou égale à 10 mm, ici égale à 10 mm.

L'extrémité 35 radialement extérieure de l'armature de renfort de flanc 25 est axialement à l'intérieur de l'extrémité axialement extérieure 37 de la nappe de sommet radialement adjacente à l'armature de renfort de flanc 25, ici la nappe de travail 18 radialement la plus à l'intérieur. La distance axiale D2 entre l'extrémité radialement extérieure de l'armature de renfort de flanc et l'extrémité axialement extérieure 37 de la nappe de sommet radialement adjacente, ici la nappe de travail 18, à l'armature de renfort de flanc 25 est supérieure ou égale à 10 mm, ici égale à 10 mm.

Le rapport R=max(K1,i)/min(K2,j) est strictement supérieur à 1 avec :
- K1,i étant le facteur de torsion de chacun des i brins multifilamentaires de carcasse de chaque élément de renfort filaire textile de carcasse défini par K1,i=R1.[T1,i/(1000.d1,i)]^{1/2} dans lequel T1,i, exprimé en tex, est le titre de chacun des i brins multifilamentaires de carcasse et d1,i est la densité du matériau dans lequel est réalisé chacun des i brins multifilamentaires de carcasse,
- K2 étant le facteur de torsion de chacun des j brins multifilamentaires de renfort de flanc de chaque élément de renfort filaire textile de renfort de flanc défini par K2,j=R2.[T2,j/(1000.d2,j)]^{1/2} dans lequel T2,j, exprimé en tex, est le titre de chacun des j brins multifilamentaires de renfort de flanc et d2,j est la densité du matériau dans lequel est réalisé chacun des j brins multifilamentaires de renfort de flanc.

On a généralement les densités suivantes : 1,44 pour l'aramide, 1,25 à 1,40 pour les polyesters et 1,38 pour le PET.

Les brins multifilamentaires de carcasse présentent la même torsion, le même titre et sont tous deux réalisés en polyester. Ainsi, max(K1,i)=K1,1=K1,2=K1.

De façon analogue, les brins multifilamentaires de renfort de flanc présentent la même torsion, le même titre et sont tous deux réalisés en polyester. Ainsi, min(K2,j)=K2,1=K2,2=K2.

Dans certains modes de réalisation décrits, on a R≥1,05, de préférence R≥1,10, plus préférentiellement R≥1,30 et encore plus préférentiellement R≥1,40. On a également R≤2, de préférence, R≤1,75 et plus préférentiellement R≤1,6. Dans le premier mode de réalisation décrit, on a K1 =135,67 et K2=95,83 soit R=K1/K2=1,42.

Le rapport R'=Fm1/Fm2 dans lequel Fm1 est la force à rupture de l'armature de carcasse 32 et Fm2 est la force à rupture de l'armature de renfort de flanc 25 est inférieur à 1, de préférence inférieur ou égal à 0,8. Le rapport R'=Fm1/Fm2 est supérieur ou égal à 0,4, de préférence à 0,5 et plus préférentiellement à 0,6. Ici R'=0,68.

Chaque nappe de travail 16, 18 comprend des éléments de renfort filaires, de préférence métalliques, formant un angle allant de 15° et 40°, de préférence allant de 20° à 30° et ici égal à 26° avec la direction circonférentielle du pneumatique. Les éléments de renfort filaires sont croisés d'une nappe de travail par rapport à l'autre.

La nappe de frettage 19 comprend des éléments de renfort filaires textiles formant un angle au plus égal à 10°, de préférence allant de 5° à 10° avec la direction circonférentielle Z du pneumatique 10.

Chaque nappe de travail 16, 18, de frettage 19, de renfort de flanc 27 et de carcasse 34 comprend une matrice d'élastomère dans laquelle sont noyés les éléments de renfort de la nappe correspondante. Les compositions de caoutchouc des matrices d'élastomère des nappes de travail 16, 18, de frettage 19 de renfort de flanc 27 et de carcasse 34 sont des compositions conventionnelles pour calandrage d'éléments de renfort comprenant de façon classique un élastomère diénique, par exemple du caoutchouc naturel, une charge renforçante, par exemple du noir de carbone et/ou de la silice, un système de réticulation, par exemple un système de vulcanisation, de préférence comprenant du soufre, de l'acide stéarique et de l'oxyde de zinc, et éventuellement un accélérateur et/ou un retardateur de vulcanisation et/ou divers additifs.

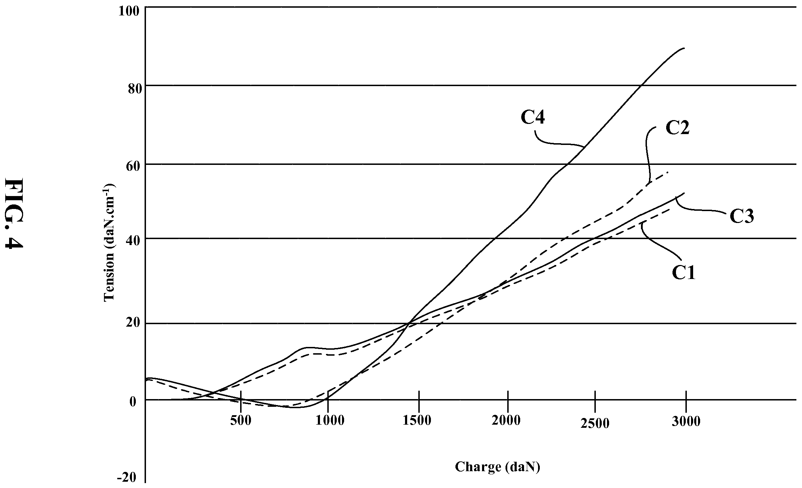

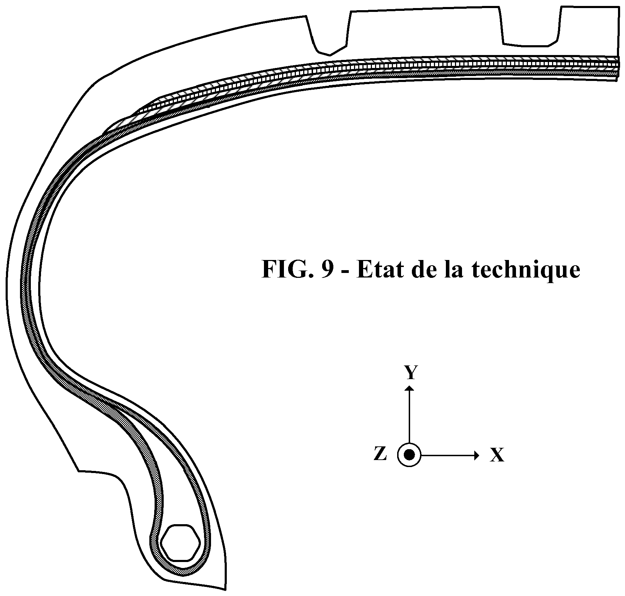

La figure 4 montre des résultats de calculs concernant un flanc de pneumatique soumis à de grandes déformations. On a tracé la tension T (en daN.cm^{- 1}) en fonction de la charge Z (en daN). Les courbes C1 et C2 (en pointillés) correspondent au pneumatique T de la figure 9 comprenant des éléments de renfort filaires textiles de carcasse et de renfort de flanc en PET avec T1=T2=144 tex et R1=R2=420 tours.m⁻¹.

Chaque courbe C1, C2 (en pointillés) représente la tension reprise par les éléments de renfort filaires textiles respectivement du brin aller et du brin retour de l'armature de carcasse du pneumatique T de la figure 9.

Chaque courbe C3, C4 (ligne continue) représente la tension reprise par les éléments de renfort filaires textiles respectivement de l'armature de carcasse et de l'armature de renfort de flanc du pneumatique 10 selon le premier mode de réalisation décrit.

La force à la rupture totale des armatures de carcasse et de renfort de flanc du pneumatique selon l'invention est légèrement supérieure à la force à la rupture totale des brins aller et retour du pneumatique T de sorte que le pneumatique selon l'invention rompt à des charges légèrement plus élevées que le pneumatique T mais avec une endurance bien supérieure au pneumatique T et ce, à iso masse, comme le démontrent les tests ci-après, ce qui illustre bien l'intérêt d'associer une armature de carcasse « sous-dimensionnée » avec une armature de renfort de flanc vérifiant R=max(K1,i)/min(K2,j)>1.

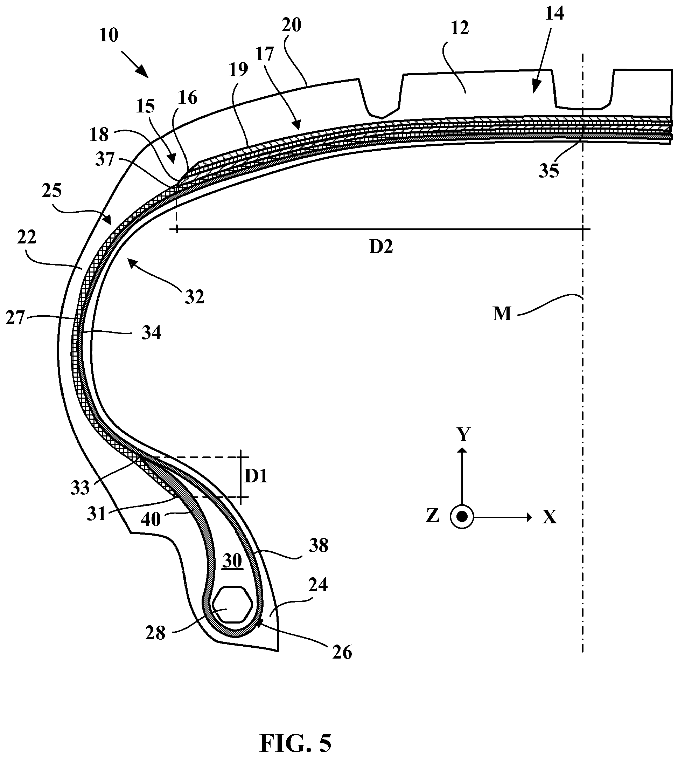

On a représenté sur la figure 5 un pneumatique selon un deuxième mode de réalisation de l'invention. Les éléments analogues à ceux représentés sur la figure 1 sont désignés par des références identiques.

A la différence du pneumatique selon le premier mode de réalisation, l'armature de renfort de flanc 25 s'étend, dans le bourrelet 24, axialement à l'extérieur du brin retour 40.

De plus, l'armature de renfort de flanc 25 s'étend, sous le sommet 12, axialement au moins jusqu'au plan médian M du pneumatique 10. En l'espèce, le pneumatique 10 comprend une unique armature de renfort de flanc 25 s'étendant d'un bourrelet 24 à l'autre du pneumatique 10 en passant par le plan médian M du pneumatique 10. En variante, on pourrait envisager deux armatures de renfort de flanc 25 s'étendant depuis chaque bourrelet 24 et jointives sensiblement au plan médian M du pneumatique 10.

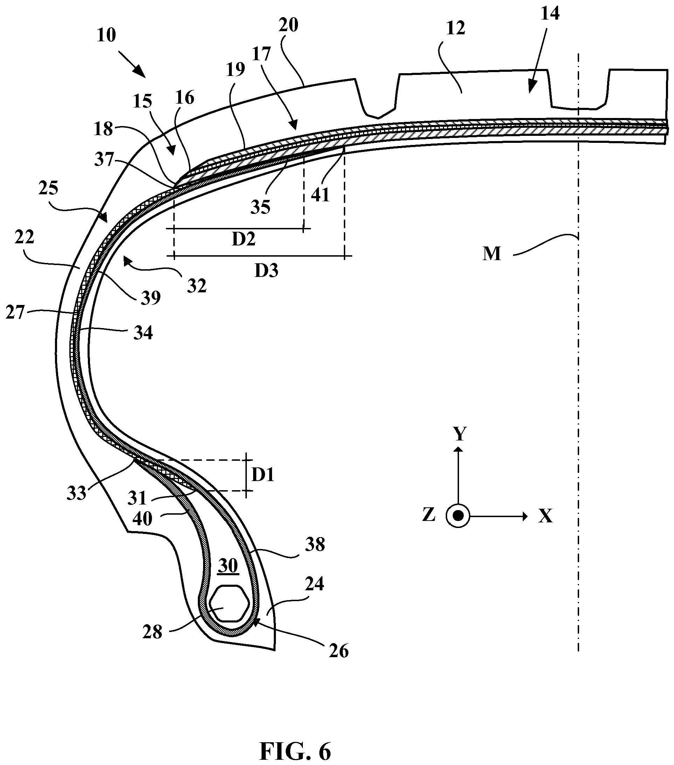

On a représenté sur la figure 6 un pneumatique selon un troisième mode de réalisation de l'invention. Les éléments analogues à ceux représentés sur les figures précédentes sont désignés par des références identiques.

A la différence des pneumatiques selon les premier et deuxième modes de réalisation, le pneumatique selon le troisième mode de réalisation comprend une armature de carcasse 32 axialement discontinue. L'armature de carcasse 32 présente une discontinuité s'étendant axialement en partie sous le sommet 12.

L'armature de carcasse axialement discontinue 32 comprend deux nappes de carcasse 39 comprenant chacune une extrémité axialement interne 41 agencée axialement à l'intérieur de l'extrémité axialement extérieure 37 de la nappe de sommet radialement adjacente, ici la nappe 18. Ici, la distance D3 entre l'extrémité axialement extérieure 37 de la nappe de sommet radialement adjacente 18 et l'extrémité axialement interne 41 de l'armature de carcasse 32 est supérieure ou égale à 10 mm et ici D3=12 mm.

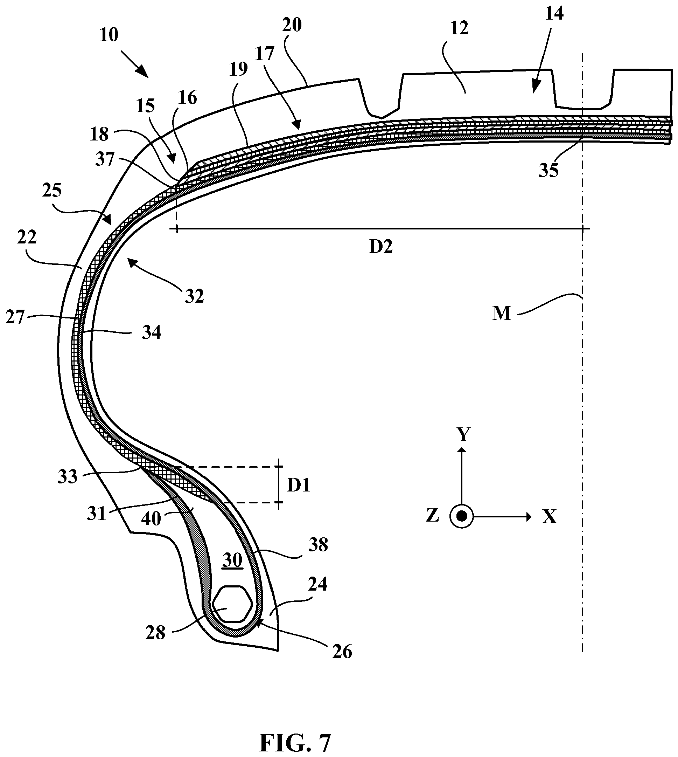

On a représenté sur la figure 7 un pneumatique selon un quatrième mode de réalisation de l'invention. Les éléments analogues à ceux représentés sur les figures précédentes sont désignés par des références identiques.

A la différence du deuxième mode de réalisation et comme dans le premier mode de réalisation, l'armature de renfort de flanc 25 du pneumatique 10 selon le quatrième mode de réalisation est agencée axialement à l'extérieur du brin aller 38 et s'étend, dans chaque bourrelet 24, axialement entre le brin aller 38 et le brin retour 40 de l'armature de carcasse 32.

Comme dans le deuxième mode de réalisation, l'armature de renfort de flanc 25 s'étend, sous le sommet 12, axialement au moins jusqu'au plan médian M du pneumatique 10. En l'espèce, le pneumatique 10 comprend une unique armature de renfort de flanc 25 s'étendant d'un bourrelet 24 à l'autre du pneumatique 10 en passant par le plan médian M du pneumatique 10.

On décrit également un pneumatique selon un cinquième mode de réalisation (non représenté) dans lequel, à la différence du pneumatique selon le premier mode de réalisation, T1=220 tex, R1=370 tours.m-1 et T2=220 tex, R2=240 tours.m-1. On a alors R=max(K1,i)/min(K2,j) strictement supérieur à 1, de préférence R≥1,05, plus préférentiellement R≥1,10, encore plus préférentiellement R≥1,30 et encore plus préférentiellement R≥1,40. Comme K1,1=K1,2=K1 et K2,1=K2,2=K2, on a R=K1/K2=147,73/95,83=1,54. On a R' inférieur à 1, ici R'=0,96.

On décrit également un pneumatique selon un sixième mode de réalisation (non représenté) dans lequel, à la différence du pneumatique selon le premier mode de réalisation, T1=110 tex, R1=394 tours.m⁻¹ et T2=144 tex, R2=290 tours.m⁻¹. On a alors R=max(K1,i)/min(K2,j) strictement supérieur à 1, de préférence R≥1,05, plus préférentiellement R≥1,10. Comme K1,1=K1,2=K1 et K2,1=K2,2=K2, on a R=K1/K2=111,24/93,68=1,19. On a également R'=0,64.

On décrit également un pneumatique selon un septième mode de réalisation (non représenté) dans lequel, à la différence du pneumatique selon le premier mode de réalisation, le rapport R'=Fm1/Fm2 est inférieur 1, de préférence inférieur ou égal à 0,8 et plus préférentiellement inférieur ou égal à 0,6 et supérieur ou égal à 0,4, de préférence à 0,5. Dans ce septième mode de réalisation, R'=0,59.

L'invention porte en particulier sur un pneumatique selon un huitième mode de réalisation (non représenté) dans lequel, à la différence du pneumatique selon le premier mode de réalisation, T1=144 tex, R1=420 tours.m⁻¹ et T2=334 tex, R2=270 tours.m⁻¹. On a alors R=max(K1,i)/min(K2,j) strictement supérieur à 1. Comme K1,1=K1,2=K1 et K2,1=K2,2=K2, on a R=K1/K2=135,67/132,83=1,02. On a également R'=Fm1/Fm2 supérieur ou égal à 0,4, de préférence à 0,5 et ici R'=0,67.

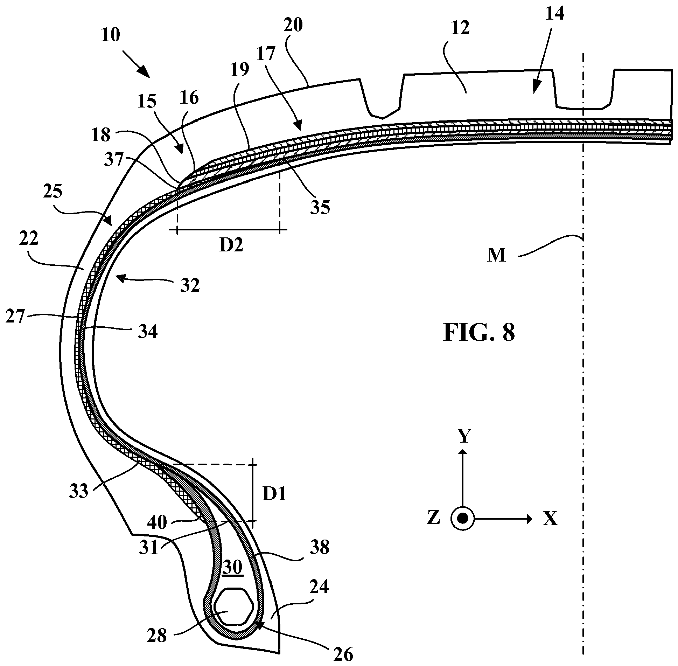

On a représenté sur la figure 8 un pneumatique selon un neuvième mode de réalisation de l'invention. Les éléments analogues à ceux représentés sur les figures précédentes sont désignés par des références identiques.

A la différence du pneumatique selon le premier mode de réalisation, l'armature de renfort de flanc 25 s'étend, dans le bourrelet 24, axialement à l'extérieur du brin retour 40.

On a rassemblé dans les tableaux 1 et 2 ci-dessous les différentes caractéristiques des nappes de carcasse et de renfort de flanc des pneumatiques selon les premier, cinquième, sixième, septième et huitième modes de réalisation décrits ci-dessus, notés 10₁, 10₅, 10₆, 10₇ et 10₈. On a également mis les caractéristiques du pneumatique T de l'état de la technique.

On notera que, pour chaque élément de renfort 36 filaire textile de carcasse, 90 ≤ T1,i ≤ 250 et 340 ≤ R1 ≤ 440. On a préférentiellement 110 ≤ T1,i ≤ 170 et 390 ≤ R1 ≤ 450 pour les premier, septième et huitième modes de réalisation. On a préférentiellement 190 ≤ T1,i ≤ 250 et 340 ≤ R1 ≤ 400 pour le cinquième mode de réalisation. On a préférentiellement 90 ≤ T1,i ≤ 140 et 370 ≤ R1 ≤ 430 pour le sixième mode de réalisation.

On notera également que, pour chaque élément de renfort filaire textile 29 de renfort de flanc, 120 ≤ T2,i ≤ 360 et 220 ≤ R2 ≤ 310. On a préférentiellement 190 ≤ T2,i ≤ 250 et 210 ≤ R2 ≤ 270 pour les premier, cinquième et septième modes de réalisation. On a préférentiellement 110 ≤ T2,i ≤ 170 et 260 ≤ R2 ≤ 320 pour le sixième mode de réalisation. On a préférentiellement 300 ≤ T2,i ≤ 360 et 240 ≤ R2 ≤ 300 pour le huitième mode de réalisation.

On notera que le facteur de torsion K1,i de chaque brin multifilamentaire de carcasse est compris dans un domaine de valeurs allant de 100 à 155. De préférence, K1,i est compris dans un domaine de valeurs allant de 125 à 155 pour les premier, cinquième, septième et huitième modes de réalisation et de 100 à 120 pour le sixième mode de réalisation.

On notera que le facteur de torsion K2,j de chaque brin multifilamentaire de renfort de flanc est compris dans un domaine de valeurs allant de 80 à 150. De préférence, K2,j est compris dans un domaine de valeurs allant de 90 à 105 pour les premier, cinquième, sixième et septième modes de réalisation et de 125 à 150 pour le huitième mode de réalisation.

**Tableau 1**

| | T | | 10₁ (hors invention) | | 10₅ (hors invention) | |
|---|---|---|---|---|---|---|
| | Carcasse | Renfort de flanc | Carcasse | Renfort de flanc | Carcasse | Renfort de flanc |
| T1,i, T2,j | 144 | 144 | 144 | 220 | 220 | 220 |
| R1, R2 | 420 | 420 | 420 | 240 | 370 | 240 |
| K1,i, K2,j | 136 | 136 | 136 | 96 | 148 | 96 |
| R | 1 | | 1,42 | | 1,54 | |
| R' | 1 | | 0,68 | | 0,96 | |

**Tableau 2**

| | 10₆ (hors invention) | | 10₇ (hors invention) | | 101 (invention) | |
|---|---|---|---|---|---|---|
| | Carcasse | Renfort de flanc | Carcasse | Renfort de flanc | Carcasse | Renfort de flanc |
| T1,i, T2,j | 110 | 144 | 144 | 220 | 144 | 334 |
| R1, R2 | 394 | 290 | 420 | 240 | 420 | 270 |
| K1,i, K2,j | 111 | 94 | 136 | 96 | 136 | 133 |
| R | 1,19 | | 1,42 | | 1,02 | |
| R' | 0,64 | | 0,59 | | 0,67 | |

### TESTS COMPARATIFS

On a comparé un pneumatique de l'état de la technique T représenté sur la figure 9 et deux pneumatiques selon les premier et huitième modes de réalisation respectivement noté 10₁ et 10₈. Chaque pneumatique de test T et selon l'invention présente une dimension 245/40R18.

Le pneumatique T comprend des nappes de carcasse et de renfort de flanc comprenant chacune des éléments de renfort de carcasse et de renfort de flanc identiques. Les caractéristiques de ces pneumatiques T, 10₁ et 10₈ sont rassemblées dans le tableau 3 ci-dessous.

On a mesuré les masses de chaque pneumatique. On a converti les valeurs obtenues par rapport au pneumatique de l'état de la technique T qui équivaut à une valeur de 100. Plus la valeur est supérieure à 100, plus léger est le pneumatique par rapport au pneumatique de l'état de la technique T.

On a mesuré la force à rupture des armatures de carcasse et de renfort de flanc initiale Fi de chaque pneumatique avant roulage. On a également mesuré la force à rupture des armatures de carcasse et de renfort de flanc résiduelle Fr de chaque pneumatique après roulage pendant 35 000 km. On a converti les valeurs obtenues par rapport au pneumatique de l'état de la technique T qui équivaut à une valeur de 100. Plus la valeur est supérieure à 100, meilleure est la force à rupture des armatures de carcasse et de renfort de flanc, initiale ou résiduelle, obtenue par rapport au pneumatique de l'état de la technique T.

Pour chaque pneumatique, on a également mesuré la déchéance D de la force à rupture à l'épaule, c'est-à-dire le rapport (Fi-Fr)/Fi.

**Tableau 3**

| | T | | 10₁ (hors invention) | | 10₈ (invention) | |
|---|---|---|---|---|---|---|
| | Carcasse | Renfort de flanc | Carcasse | Renfort de flanc | Carcasse | Renfort de flanc |
| R | 1 | | 1,41 | | 1,02 | |
| Masse | 100 | | 100 | | 99 | |
| Fi | 100 | | 106 | | 119 | |
| Fr | 100 | | 104 | | 116 | |
| D | -7% | | -8,7% | | -9,7% | |

On note que les pneumatiques 10₁ et 10₈ présentent des masses sensiblement égales à celle du pneumatique de l'état de la technique T tout en présentant une force à rupture, c'est-à-dire une résistance au « pinch shock » améliorée et ce, même après de nombreux kilomètres parcourus.

On notera également que, bien que présentant une déchéance supérieure à celle du pneumatique 10₁, le pneumatique 10₈ selon l'invention présente une force à rupture résiduelle Fr supérieure à celle du pneumatique 10₁. En effet, la force à rupture initiale Fi du pneumatique 10₈ est bien supérieure à celle du pneumatique 10₁. Les pneumatiques 10₁ et 10₈ présentent donc une endurance améliorée par rapport au pneumatique de l'état de la technique T, et tout particulièrement le pneumatique 10₈ selon l'invention.

L'invention ne se limite pas aux modes de réalisation décrits ci-dessus.

En effet, on pourra également envisager un pneumatique selon l'invention dans lequel l'armature de sommet comprend également une armature de protection radialement intercalée entre l'armature de frettage et l'armature de travail.

On pourra aussi envisager un pneumatique selon l'invention dans lequel l'armature de sommet ne comprend pas d'armature de frettage mais une armature de protection et une armature de travail, l'armature de protection étant radialement intercalée entre la bande de roulement et l'armature de travail.

On pourra également envisager un mode de réalisation dans lequel le pneumatique comprend une paroi interne étanche du pneumatique, la paroi interne étanche étant au moins en partie recouverte d'une couche d'un produit auto-obturant. Les avantages énoncés précédemment relatifs aux éléments de renfort de carcasse et de renfort de flancs demeurent et s'ajoutent, de façon synergique, à ceux de la couche du produit auto-obturant de façon à obtenir un pneumatique plus robuste à l'égard des crevaisons, que ce soit en présentant une endurance optimisée vis-à-vis du « pinch- shock » ou en résistant aux effets néfastes d'une perforation.

On pourra également combiner les caractéristiques des différents modes de réalisation décrits ou envisagés ci-dessus sous réserve que celles-ci soient compatibles entre elles.

On pourra ainsi envisager de combiner les caractéristiques des éléments de renfort filaires de carcasse et de renfort de flanc des pneumatiques du huitième modes de réalisation avec l'architecture des pneumatiques des deuxième, troisième et neuvième modes de réalisation.

## Revendications

1. Pneumatique (10) comprenant :
- un sommet (12) surmonté d'une bande de roulement (20), deux flancs (22), deux bourrelets (24), chaque flanc (22) reliant chaque bourrelet (24) au sommet (12),
- une armature de carcasse (32) ancrée dans chacun des bourrelets (24) et s'étendant depuis chaque bourrelet (24) à travers chaque flanc (22) et comprenant des éléments de renfort filaires textiles (36) de carcasse, chaque élément de renfort filaire textile (36) de carcasse comprenant au moins deux brins multifilamentaires de carcasse enroulés en hélice l'un autour de l'autre selon une torsion R1 exprimée en tours par mètre,
- une armature de renfort de flanc (25) comprenant des éléments de renfort filaires textiles (29) de renfort de flanc, chaque élément de renfort filaire textile (29) de renfort de flanc comprenant au moins deux brins multifilamentaires de renfort de flanc enroulés en hélice l'un autour de l'autre selon une torsion R2 exprimée en tours par mètre,
pneumatique (10) **caractérisé en ce que** R=max(K1,i)/min(K2,j)>1 avec
- K1,i étant le facteur de torsion de chacun des i brins multifilamentaires de carcasse de chaque élément de renfort filaire textile (36) de carcasse défini par K1,i=R1.[T1,i/(1000.d1,i)]^{1/2} dans lequel T1,i, exprimé en tex, est le titre de chacun des i brins multifilamentaires de carcasse et d1,i est la densité du matériau dans lequel est réalisé chacun des i brins multifilamentaires de carcasse, le facteur de torsion K1,i de chaque brin multifilamentaire de carcasse étant compris dans un domaine de valeurs allant de 125 à 155, le titre T1,i de chacun des i brins multifilamentaires de carcasse étant compris dans un domaine de valeurs allant de 110 à 170, la torsion R1 étant compris dans un domaine de valeurs allant 390 à 450
- K2,j étant le facteur de torsion de chacun des j brins multifilamentaires de renfort de flanc de chaque élément de renfort filaire textile (29) de renfort de flanc défini par K2,j=R2.[T2,j/(1000.d2,j)]^{1/2} dans lequel T2,j, exprimé en tex, est le titre de chacun des j brins multifilamentaires de renfort de flanc et d2,j est la densité du matériau dans lequel est réalisé chacun des j brins multifilamentaires de renfort de flanc, le facteur de torsion K2,j de chaque brin multifilamentaire de renfort de flanc étant compris dans un domaine de valeurs allant de 125 à 150, le titre T2,j de chacun des j brins multifilamentaires de renfort de flanc étant compris dans un domaine de valeurs allant de 300 à 360, la torsion R2 étant compris dans un domaine de valeurs allant 240 à 300.

2. Pneumatique (10) selon la revendication précédente, dans lequel R≥1,05, de préférence R≥1,10, plus préférentiellement R≥1,30 et encore plus préférentiellement R≥1,40.

3. Pneumatique (10) selon l'une quelconque des revendications précédentes, dans lequel R≤2, de préférence, R≤1,75 et plus préférentiellement R≤1,6.

4. Pneumatique (10) selon l'une quelconque des revendications précédentes, dans lequel le rapport R'=Fm1/Fm2 dans lequel Fm1 est la force à rupture de l'armature de carcasse et Fm2 est la force à rupture de l'armature de renfort de flanc est inférieur à 1, de préférence inférieur ou égal à 0,8 et plus préférentiellement inférieur ou égal à 0,6.

5. Pneumatique (10) selon l'une quelconque des revendications précédentes, le rapport R'=Fm1/Fm2 dans lequel Fm1 est la force à rupture de l'armature de carcasse et Fm2 est la force à rupture de l'armature de renfort de flanc est supérieur ou égal à 0,4, de préférence à 0,5 et plus préférentiellement à 0,6.

6. Pneumatique (10) selon l'une quelconque des revendications précédentes, dans lequel l'armature de carcasse (32) est axialement discontinue, la discontinuité s'étendant axialement au moins en partie sous le sommet (12).

7. Pneumatique (10) selon l'une quelconque des revendications précédentes, dans lequel l'armature de carcasse (32) comprend une unique nappe (34) de carcasse.

8. Pneumatique (10) selon l'une quelconque des revendications précédentes, dans lequel l'armature de renfort de flanc (25) comprend une unique nappe (27) de renfort de flanc.

9. Pneumatique (10) selon l'une quelconque des revendications précédentes, dans lequel l'armature de carcasse (32) est ancrée dans chaque bourrelet (24) par un retournement autour d'une structure annulaire (26) du bourrelet (24) de manière à former un brin aller (38) et un brin retour (40).

10. Pneumatique (10) selon l'une quelconque des revendications précédentes, comprenant une armature de sommet (14) radialement intercalée entre l'armature de carcasse (32) et la bande de roulement (20).

11. Pneumatique (10) selon la revendication précédente, dans lequel, l'armature de sommet (14) comprenant au moins une nappe de sommet (16, 18, 19), l'extrémité (35) radialement extérieure de l'armature de renfort de flanc (25) est axialement à l'intérieur de l'extrémité axialement extérieure (37) de la nappe de sommet (18) radialement adjacente à l'armature de renfort de flanc (25).

12. Pneumatique selon la revendication précédente, dans lequel la distance axiale (D2) entre l'extrémité (35) radialement extérieure de l'armature de renfort de flanc (25) et l'extrémité axialement extérieure (37) de la nappe de sommet (18) radialement adjacente à l'armature de renfort de flanc (25) est supérieure ou égale à 10 mm.

## Patentansprüche

1. Reifen (10), welcher umfasst:
- einen Scheitel (12), der von einem Laufstreifen (20) überlagert wird, zwei Seitenwände (22), zwei Wülste (24), wobei jede Seitenwand (22) den jeweiligen Wulst (24) mit dem Scheitel (12) verbindet,
- eine Karkassenbewehrung (32), die in jedem der Wülste (24) verankert ist und sich von jedem Wulst (24) aus durch die jeweilige Seitenwand (22) hindurch erstreckt und fadenförmige textile Karkassenverstärkungselemente (36) umfasst, wobei jedes fadenförmige textile Karkassenverstärkungselement (36) wenigstens zwei Karkassen-Multifilamentstränge umfasst, die mit einem in Windungen pro Meter ausgedrückten Drall R1 schraubenförmig umeinandergewickelt sind,
- eine Seitenwandbewehrung (25), die fadenförmige textile Verstärkungselemente (29) zur Seitenwandverstärkung umfasst, wobei jedes fadenförmige textile Verstärkungselement (29) zur Seitenwandverstärkung wenigstens zwei Seitenwandverstärkungs-Multifilamentstränge umfasst, die mit einem in Windungen pro Meter ausgedrückten Drall R2 schraubenförmig umeinandergewickelt sind,
wobei der Reifen (10) **dadurch gekennzeichnet ist, dass** R = max(K1,i)/min(K2,j) > 1, wobei
- K1,i der Drallfaktor jedes der i Karkassen-Multifilamentstränge jedes fadenförmigen textilen Karkassenverstärkungselements (36) ist, der durch K1,i = R1.[T1,i/(1000.d1,i)]^{1/2} definiert ist, wobei T1,i, ausgedrückt in tex, der Titer jedes der i Karkassen-Multifilamentstränge ist und d1,i die Dichte des Materials ist, aus welchem jeder der i Karkassen-Multifilamentstränge hergestellt ist, wobei der Drallfaktor K1,i jedes Karkassen-Multifilamentstranges in einem Wertebereich von 125 bis 155 liegt, der Titer T1,i jedes der i Karkassen-Multifilamentstränge in einem Wertebereich von 110 bis 170 liegt, der Drall R1 in einem Wertebereich von 390 bis 450 liegt,
- K2,j der Drallfaktor jedes der j Seitenwandverstärkungs-Multifilamentstränge jedes fadenförmigen textilen Verstärkungselements (29) zur Seitenwandverstärkung ist, der durch K2,j = R2.[T2,j/(1000.d2,j)]^{1/2} definiert ist, wobei T2,j, ausgedrückt in tex, der Titer jedes der j Seitenwandverstärkungs-Multifilamentstränge ist und d2,j die Dichte des Materials ist, aus welchem jeder der j Seitenwandverstärkungs-Multifilamentstränge hergestellt ist, wobei der Drallfaktor K2,j jedes Seitenwandverstärkungs-Multifilamentstranges in einem Wertebereich von 125 bis 150 liegt, der Titer T2,j jedes der j Seitenwandverstärkungs-Multifilamentstränge in einem Wertebereich von 300 bis 360 liegt, der Drall R2 in einem Wertebereich von 240 bis 300 liegt.

2. Reifen (10) nach dem vorhergehenden Anspruch, wobei R≥1,05, vorzugsweise R≥1,10, stärker bevorzugt R≥1,30 und noch stärker bevorzugt R≥1,40.

3. Reifen (10) nach einem der vorhergehenden Ansprüche, wobei R≤2, vorzugsweise R≤1,75 und stärker bevorzugt R≤91,6.

4. Reifen (10) nach einem der vorhergehenden Ansprüche, wobei das Verhältnis R'=Fm1/Fm2, wobei Fm1 die Bruchkraft der Karkassenbewehrung ist und Fm2 die Bruchkraft der Seitenwandbewehrung ist, kleiner als 1, vorzugsweise kleiner oder gleich 0,8 und stärker bevorzugt kleiner oder gleich 0,6 ist.

5. Reifen (10) nach einem der vorhergehenden Ansprüche, das Verhältnis R'=Fm1/Fm2, wobei Fm1 die Bruchkraft der Karkassenbewehrung ist und Fm2 die Bruchkraft der Seitenwandbewehrung ist, größer oder gleich 0,4, vorzugsweise größer oder gleich 0,5 und stärker bevorzugt größer oder gleich 0,6 ist.

6. Reifen (10) nach einem der vorhergehenden Ansprüche, wobei die Karkassenbewehrung (32) axial unterbrochen ist, wobei sich die Diskontinuität axial wenigstens teilweise unter dem Scheitel (12) erstreckt.

7. Reifen (10) nach einem der vorhergehenden Ansprüche, wobei die Karkassenbewehrung (32) eine einzige Karkassenlage (34) umfasst.

8. Reifen (10) nach einem der vorhergehenden Ansprüche, wobei die Seitenwandbewehrung (25) eine einzige Seitenwandverstärkungslage (27) umfasst.

9. Reifen (10) nach einem der vorhergehenden Ansprüche, wobei die Karkassenbewehrung (32) in jedem Wulst (24) durch einen Umschlag um eine ringförmige Struktur (26) des Wulstes (24) herum verankert ist, so dass ein hinführender Strang (38) und ein zurückführender Strang (40) gebildet werden.

10. Reifen (10) nach einem der vorhergehenden Ansprüche, welcher eine Scheitelbewehrung (14) umfasst, die radial zwischen der Karkassenbewehrung (32) und dem Laufstreifen (20) angeordnet ist.

11. Reifen (10) nach dem vorhergehenden Anspruch, wobei die Scheitelbewehrung (14) wenigstens eine Scheitellage (16, 18, 19) umfasst, wobei sich das radial äußere Ende (35) der Seitenwandbewehrung (25) axial innerhalb des axial äußeren Endes (37) der Scheitellage (18) befindet, die der Seitenwandbewehrung (25) radial benachbart ist.

12. Reifen nach dem vorhergehenden Anspruch, wobei der axiale Abstand (D2) zwischen dem radial äußeren Ende (35) der Seitenwandbewehrung (25) und dem axial äußeren Ende (37) der Scheitellage (18), die der Seitenwandbewehrung (25) radial benachbart ist, größer oder gleich 10 mm ist.

## Claims

1. Tyre (10), comprising:
- a crown (12) surmounted by a tread (20), two sidewalls (22), two beads (24), each sidewall (22) connecting each bead (24) to the crown (12),
- a carcass reinforcement (32) anchored in each of the beads (24) and extending from each bead (24) through each sidewall (22) and comprising textile filamentary carcass reinforcing elements (36), each textile filamentary carcass reinforcing element (36) comprising at least two carcass multifilament textile plies wound in a helix one about the other with a twist R1 expressed in turns per metre,
- a sidewall reinforcing reinforcement (25) comprising textile filamentary sidewall reinforcer reinforcing elements (29), each textile filamentary sidewall reinforcer reinforcing element (29) comprising at least two sidewall reinforcer multifilament textile plies wound in a helix one around the other with a twist R2 expressed in turns per metre,
which tyre (10) being **characterized in that** R=max(K1,i)/min(K2,j) >1 where
- K1,i is the twist factor of each of the i carcass multifilament textile plies of each textile filamentary carcass reinforcing element (36) defined by K1,i=R1.[T1,i/(1000.d1,i)]^{1/2} in which T1,i, expressed in tex, is the titre of each of the i carcass multifilament textile plies and d1,i is the density of the material in which each of the i carcass multifilament textile plies is made, the twist factor K1,i of each carcass multifilament textile ply being comprised in a range of values extending from 125 to 155, the titre T1,i, of each of the i carcass multifilament textile plies being comprised in a range of values extending from 110 to 170, the twist R1 being comprised in a range of values extending from 390 to 450,
- K2,j is the twist factor of each of the j sidewall reinforcer multifilament textile plies of each textile filamentary sidewall reinforcer reinforcing element (29) defined by K2,j=R2.[T2,j/(1000.d2,j)]^{1/2} in which T2,j, expressed in tex, is the titre of each of the j sidewall reinforcer multifilament textile plies and d2,j is the density of the material in which each of the j sidewall reinforcer multifilament textile plies is made, the twist factor K2,j, of each sidewall reinforcer multifilament textile ply being comprised in a range of values extending from 125 to 150, the titre T2,j of each of the j sidewall reinforcer multifilament textile plies being comprised in a range of values extending from 300 to 360, the twist R2 being comprised in a range of values extending from 240 to 300.

2. Tyre (10) according to the preceding claim, in which R≥1.05, preferably R≥1.10, more preferably R≥1.30 and more preferably still, R≥1.40.

3. Tyre (10) according to either one of the preceding claims, in which R≤2, preferably R≤1.75, and more preferably, R≤1.6.

4. Tyre (10) according to any one of the preceding claims, in which the ratio R'=Fm1/Fm2 in which Fm1 is the force at rupture of the carcass reinforcement and Fm2 is the force at rupture of the sidewall reinforcing reinforcement is less than 1, preferably less than or equal to 0.8 and more preferably, less than or equal to 0.6.

5. Tyre (10) according to any one of the preceding claims, the ratio R'=Fm1/Fm2 in which Fm1 is the force at rupture of the carcass reinforcement and Fm2 is the force at rupture of the sidewall reinforcing reinforcement is greater than or equal to 0.4, preferably greater than or equal to 0.5, and more preferably, greater than or equal to 0.6.

6. Tyre (10) according to any one of the preceding claims, in which the carcass reinforcement (32) is axially discontinuous, the discontinuity extending axially at least partially under the crown (12).

7. Tyre (10) according to any one of the preceding claims, in which the carcass reinforcement (32) comprises a single carcass ply (34).

8. Tyre (10) according to any one of the preceding claims, in which the sidewall reinforcing reinforcement (25) comprises a single sidewall reinforcing ply (27).

9. Tyre (10) according to any one of the preceding claims, in which the carcass reinforcement (32) is anchored in each bead (24) by being turned up around an annular structure (26) of the bead (24) so as to form a main strand (38) and a turn up (40).

10. Tyre (10) according to any one of the preceding claims, comprising a crown reinforcement (14) radially interposed between the carcass reinforcement (32) and the tread (20).

11. Tyre (10) according to the preceding claim, in which, with the crown reinforcement (14) comprising at least one crown ply (16, 18, 19), the radially outer end (35) of the sidewall reinforcing reinforcement (25) is axially on the inside of the axially outer end (37) of the crown ply (18) radially adjacent to the sidewall reinforcing reinforcement (25).

12. Tyre according to the preceding claim, in which the axial distance (D2) between the radially outer end (35) of the sidewall reinforcing reinforcement (25) and the axially outer end (37) of the crown ply (18) radially adjacent to the sidewall reinforcing reinforcement (25) is greater than or equal to 10 mm.
